Europäisches Patentamt

European Patent Office

Office européen des brevets

(19)

(11) Veröffentlichungsnummer: **0 286 712**
**A2**

## EUROPÄISCHE PATENTANMELDUNG

(21) Anmeldenummer: 87109264.9

(22) Anmeldetag: 27.06.87

(51) Int. Cl.⁴ **G01N 27/83 , G01B 11/10**

(30) Priorität: 16.04.87 DE 3712912

(43) Veröffentlichungstag der Anmeldung:
**19.10.88 Patentblatt 88/42**

(84) Benannte Vertragsstaaten:
**AT BE CH DE ES FR GB GR IT LI LU NL SE**

(71) Anmelder: **Westfälische Berggewerkschaftskasse**
**Herner Strasse 45**
**D-4630 Bochum(DE)**

(72) Erfinder: **Fuchs, Detlev, Dr.**
**Wortmannsweg 26**
**D-4600 Dortmund(DE)**
Erfinder: **Mertens, Paul, Dipl.-Ing.**
**Im Beuler Feld 14**
**D-4300 Essen 14(DE)**
Erfinder: **Schroeder, Reinhard, Dr.**
**Adlerweg 15**
**D-4600 Dortmund(DE)**

(74) Vertreter: **Herrmann-Trentepohl, Werner,**
**Dipl.-Ing. et al**
**Schaeferstrasse 18**
**D-4690 Herne 1(DE)**

(54) **Gerät zur Prüfung von ferromagnetischen Stahldrahtseilen, insbesondere von Förderseilen des Untertagebetriebes.**

(57) Bei einem Gerät zur Prüfung von ferromagnetischen Stahdrahtseilen, bei dem das zu prüfende Förderseil durch das Feld von Permanentmagneten getrieben wird und Streufelder erfaßt werden, wobei wenigstens eine vorzugsweise seilumfassende Induktionsspule vorgesehen ist und der Meßeinrichtung eine Auswerteelektronik nachgeschaltet ist, ist erfindungsgemäß vorgesehen, daß zur Erfassung der Streufelder Differentialmeßspulen dienen und wenigstens eine weitere Induktionsspule mit nachgeschaltetem Integrator den Seilquerschnitt wiedergebende Signale abgibt, und daß der mit einer optoelektronischen bzw. elektrischen Abtastung des zu prüfenden Förderseils festgestellte Seildurchmesser, der festgestellte metallische Seilquerschnitte sowie die Summe der Streufelder zusammen mit einer Wegmarke und einer Zeitmarke registriert sind.

Fig. 1

Die Erfindung betrifft ein Gerät zur Prüfung von ferromagnetischen Stahldrahtseilen, insbesondere von Förderseilen für den Bergbau gemäß dem Oberbegriff des Patentanspruches 1.

Das erfindungsgemäße Seilprüfgerät ist außer auf Förderseile auch auf andere bewegte und stehende Seile, wie z.B. Abspannseile, Brückenseile, Kranseile, Baggerseile oder Windenseile anwendbar. Die mit dem erfindungsgemäßen Seilprüfgerät zu prüfenden Seile können eine Litzeneinlage aus Edelstahl, Kunststoff oder Aluminium aufweisen, die keine ferromagnetischen Eigenschaften hat, deren Zustand mit dem erfindungsgemäßen Gerät aber auch nicht erfaßt zu werden braucht, weil sie lediglich als Widerlager Verwendung findet. Vorzugsweise ist die Erfindung auf die vorgeschriebene Prüfung von Förderseilen des Bergbaus anwendbar, die aus betrieblichen und arbeitssicherheitlichen Gründen in bestimmten Zeitabständen oder nach bestimmten Ereignissen vorgeschrieben ist und gibt Aufschluß über den Zustand des geprüften Förderseiles. Im Bergbau handelt es sich vor allem um die Prüfung der Förderseile in Haupt- und Blindschächten. Das erfindungsgemäße Gerät kann auch die in ihrer einfachsten Form durchgeführte Betriebsprüfung durch Inaugenscheinnahme des langsam bewegten Förderseiles ersetzen, die zwar den äußeren Zustand des Seiles, z.B. den Grad seiner Korrosion, vor allem aber die Anzahl der äußerlich sichtbaren Drahtbrüche feststellen soll, jedoch keinen Anspruch auf ausreichende Genauigkeit erheben kann. Das erfindungsgemäße Seilprüfgerät wird auch bei bergbehördlich vorgeschriebenen, von Sachverständigen durchgeführten Untersuchungen verwendet.

Die Erfindung setzt ein vorbekanntes Gerät als bekannt voraus aus (DE-OS 25 21 552).

Die im Bergbau im allgemeinen eingesetzten Förderseile sind entweder Rund-oder Flachlitzenseile. Die magnetische Streufeldmessung hat bei solchen Förderseilen zwar eine hinreichende Aussagekraft bei der Feststellung von Drahtbrüchen, was daran liegt, daß Drahtbrüche das sonst als im wesentlichen homogen anzusehende Magnetfeld des Seiles stören. Die Streufeldmessung hat aber den Nachteil, daß ihre Anzeige nicht verläßlich anderen Seilschädigungen zugeordnet werden kann, von denen insbesondere Verschleiß und Korrosion des Förderseiles von erheblicher Bedeutung sind. Das bekannte Gerät hat den schwerwiegenden Nachteil, daß seine Ergebnisse keine eindeutigen Hinweise auf Verschleiß und Korrosion liefern. Vor allem aber kann ein solches Gerät nicht die Veränderungen in Förderseilen anzeigen, welche die Ursachen von derartigen Schäden sind.

Bislang lassen sich sichere Aussagen über nachteilige Eigenschaften eines Förderseiles und deren Auswirkungen auf die Sicherheit des Seiles nur durch eine Flechtkontrolle erreichen, bei der man Abschnitte des abgelegten Förderseiles mit Abschnitten des fabrikneuen Seiles, dem sogenannten Belegstück, vergleicht und Veränderungen des Seilzustandes feststellt. Diese Methode ist jedoch nicht zerstörungsfrei und ist daher der nachträglichen Prüfung von abgelegten Förderseilen vorbehalten bzw. dient als ergänzende Untersuchung für aufliegende Seile.

An Rundlitzenseilen beobachtet man unterschiedliche Schadensursachen. So führt eine zu dick bemessene Fasereinlage zu zu breiten Litzengassen und dadurch zu freiliegenden Litzen, was beim Deformieren des Seilquerschnittes in der Seilrille von Treib-und Seilscheiben zu Zusatzspannungen und vorzeitigen Drahtbrüchen führt. Ist dagegen die Fasereinlage zu dünn, so berühren sich die Litzen in den Litzengassen und verschleißen, was einen meßbaren Seildurchmesserverlust zur Folge hat. Die im Bergbau häufig benutzten, dreilagigen Flachlitzenseile sind gegen die beschriebenen Verformungen auf den Treib-und Seilscheiben besonders empfindlich. Ihre in den Seilverband eingelegten Trensen können dann ihre Aufgabe, den direkten Kontakt der Litzen untereindander und zwischen den Litzenlagen zu vermindern, nicht mehr ausreichend erfüllen. Die sich dann ergebenden Druck-und Verschleißstellen führen zu kurzfristiger Zerstörung der mittleren Litzenlagen, was äußerlich unsichtbar bleibt und deswegen gefährlich ist.

Ausgehend von einer geometrisch nicht korrekten Ausführung der Litzenkonstruktion ergeben sich im Betrieb Abweichungen der Drahtabstände in den Litzen. Diese sogenannten positiven und negativen "Sperrungen" führen zu örtlichem Abtrieb an den Drähten. In den Drahtgassen der äußeren Litzenlage wird dann Rost (Reibrost) beobachtet. Z.B. sind bei nicht korrekter Litzenausführung von Flachlitzenseilen die Drähte von den Litzeneinlagen meist abgehoben, wenn das Förderseil lastfrei ist. Im Förderbetrieb kommt es dadurch zu einem Durchfedern der Drähte und zu Reibrost zwischen den Nachbardrähten. Reibrost und zusätzliche Biegebeanspruchungen führen zu Drahtbrüchen.

Durch nicht korrekte Litzenausführung von Rundlitzenseilen kann sich im Laufe der Aufliegezeit ihre Schlaglänge ändern. Entsprechend ändert sich hierbei auch der Schlagwinkel. Somit ändern sich die Sperrungen, und die hiermit verbundenen Schäden werden unvermeidlich.

Drahtbrüche, Verschleiß und Korrosion sind einerseits die Folge der betrieblichen Beanspruchungen und der Umwelteinflüsse und andererseits möglicher ungünstiger Seileigenschaften und ihrer Auswirkungen. Ihr rechtzeitiges Erkennen ermöglicht es dem Betreiber, sich auf den Fall eines erforderlichen Seilwechsels terminlich einzustellen.

Der Erfindung liegt daher die Aufgabe zugrunde, ein Gerät der eingangs bezeichneten Art zu - schaffen, welches eine sichere Beurteilung aller Schadensbilder in einem Meßvorgang ermöglicht und damit die Voraussetzungen für eine sichere Vorhersage schafft.

Diese Aufgabe löst die Erfindung mit den Merkmalen des Patentanspruches 1. Zweckmäßige Ausführungsformen der Erfindung sind Gegenstand der Unteransprüche.

Gemäß der Erfindung werden durch gleichzeitiges Messen dreier Meßgrößen, insbesondere äußere und innere Drahtbrüche mit den Differentialspulen der magnetischen Streufeldmessung, Korrosion und Verschleiß durch die magnetische Querschnittsmessung und durch die kontinuierliche Messung des Seildurchmessers die das Seil - schädigenden Einflüsse angezeigt. Erst die getrennte zeitgleiche Wiedergabe aller drei Meßgrößen und deren Änderungen gestattet eine zutreffende Aussage über ungünstige Seileigenschaften und bereits eingetretene Schäden. Daraus ergibt sich, wann ein Förderseil sicher betrieben werden kann und wann es abgelegt werden muß.

Insbesondere bedeutet die erfindungsgemäß vorgesehene Verwendung der Streufeldmeßspulen eine ausreichend genaue Erfassung der Drahtbrüche. Aufgetretener Verschleiß und Korrosion werden dagegen mit Hilfe des magnetischen Flusses ermittelt, den die Induktionsspule feststellt, deren Meßsignal aber Drahtbrüche nur unzuverlässig anzeigt. Die Ursachen bereits eingetretener Seilschäden werden aus den Ergebnissen der Laserstrahlabtastung der äußeren geometrischen Form des Seiles ersichtlich. Aus diesen getrennt registrierten Meßwerten ergibt sich bei Wiederholungsmessungen schließlich das Bild des Seilzustandes während der Aufliegezeit und die Möglichkeit der Voraussage, wann die bereits festgestellten Schäden ein solches Ausmaß erreichen werden, daß ein Ablegen des Förderseiles notwendig wird.

Das erfindungsgemäße Seilprüfgerät hat den Vorteil, daß es trotz seiner erschöpfenden Wiedergabe bereits eingetretener Seilschäden und der diesen zugrundeliegenden Ursachen nicht nur von Spezialisten, sondern auch von hinreichend ausgebildeten Personen gehandhabt werden kann und sich daher insbesondere auch für die betriebliche Seilprüfung eignet.

Die Einzelheiten der Erfindung ergeben sich aus der nachfolgenden Beschreibung zweier Ausführungs beispiele anhand der Figuren in der Zeichnung; es zeigen

Fig. 1 schematisch links das neue Meßgerät in einer ersten Ausführungsform und rechts in einem Blockdiagramm seine Auswerteelektronik mit angegliederter Registrierung,

Fig. 2 in der Fig. 1 entsprechender Darstellung eine abgeänderte Ausführungsform des erfindungsgemäßen Gerätes,

Fig. 3 in der Fig. 1 entsprechender Darstellung eine praktische Ausführungsform des erfindungsgemäßen Gerätes,

Fig. 4 eine Draufsicht auf den Magneterreger in Fig. 3 in der oberen Darstellung und in der unteren Darstellung links die Ausführungsform nach Fig. 1 und rechts die Ausführungsform nach Fig. 2, sowie

Fig. 5 schematisch die opto-elektrische Einrichtung des erfindungsgemäßen Gerätes in einer Draufsicht.

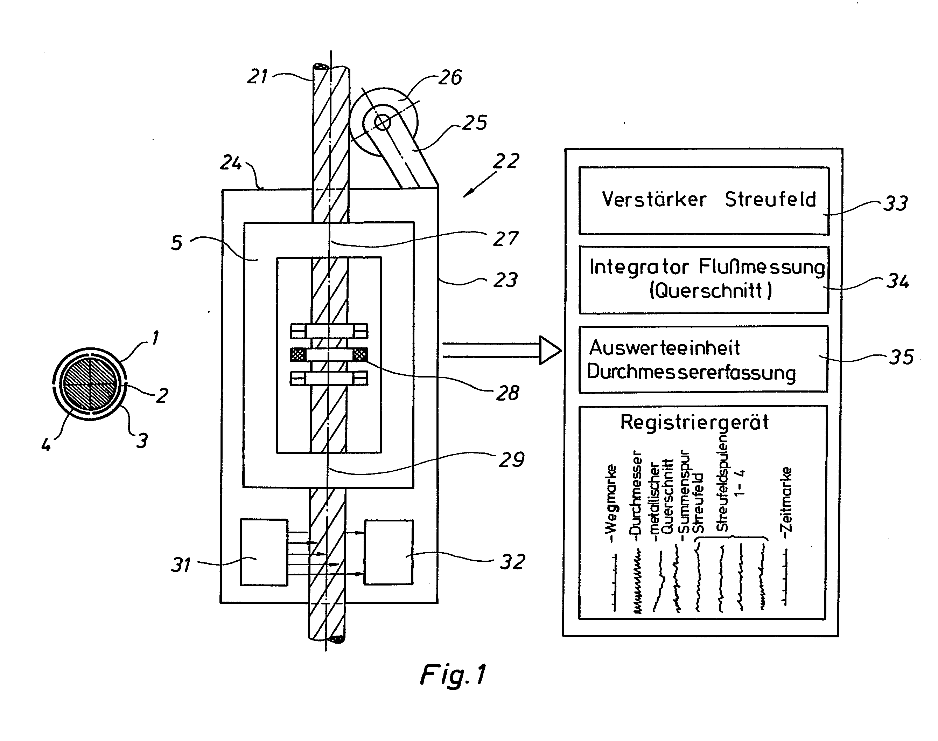

Gemäß der Darstellung in Fig. 1 wird ein Förderseil (21) mit dem Gerät (22) betrieblich geprüft. Das Gerät weist ein Gehäuse (23) auf. Auf der Oberseite (24) eines Gerätegehäuses befindet sich ein Rollen träger (25) mit einer Rolle (26), welche den Weg des Seiles (21) und die Seilgeschwindigkeit während des Seildurchlaufes mißt.

Im Inneren des Gerätes sitzt der Permanentmagneterreger (5), dessen ungleichmäßige Pole (27 und 29) das Förderseil umfassen. Die Erreger sind Seltenerdmagnete und erzeugen in dem Förderseil (21) ein Magnetfeld. Zwischen den Polen befinden sich in gewissem Abstand voneinander zwei Streufeldmeßspulenpaare (1, 2 bzw. 3, 4). Diese unfassen paarweise das Förderseil (21) und sind als Differentialmeßspulen für das Streufeld ausgeführt.

Zwischen den Streufeldmeßspulen sitzt eine seilumfassende Induktionsspule (28). Hier ist ein elektronischer Integrator für die Querschnittsmessung nachgeschaltet. Mit der Spule (28) wird der Seilquerschnitt gemessen.

Unterhalb des Permanentmagneterregers (5) sitzt eine optische Durchmessererfassung. Sie besteht aus einem Laserstrahlemitter (31) und einem Laserstrahlempfänger (32). Die Meßwerte der optischen Durchmessererfassung werden mit einer Ausweter elektronik verarbeitet.

Dementsprechend weist das Gerät eine Streufeldverstärkung (33), den Integrator für den magnetischen Fluß (34) und die Auswerteeinheit (35) für die Durchmessererfassung auf. Die Meßwertverarbeitung wird auf einem Registriergerät angezeigt. Unter der von der Rolle (26) festgestellten Wegmarke ist gemäß dem Ausführungsbeispiel der Seildurchmesser abgebildet, auf den der Reihe nach der metallische Querschnitt und die Summenkurve der Streufeldmessung folgen. Weiterhin sind die einzelnen Meßwerte der Streufeldspulen (1 bis 4) abgebildet. Zur Ermittlung der Seilgeschwindigkeit wird außerdem eine Zeitmarkierung mitgeführt.

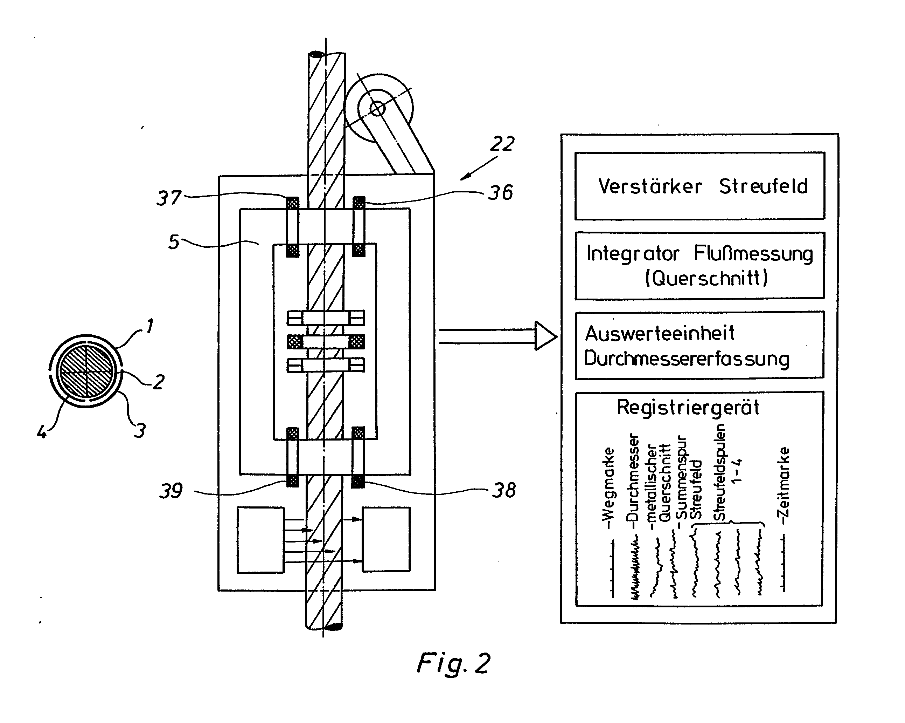

Das Gerät (22) nach der Ausführungsform der Fig. 2 ist insofern abgeändert, als hierbei ihre Querschnittsmeßspulen (36 bis 39) Verwendung finden, die in unmittelbarer Nähe der Magnetpole (27 und 29) des Permanentmagneterregers angeordnet sind.

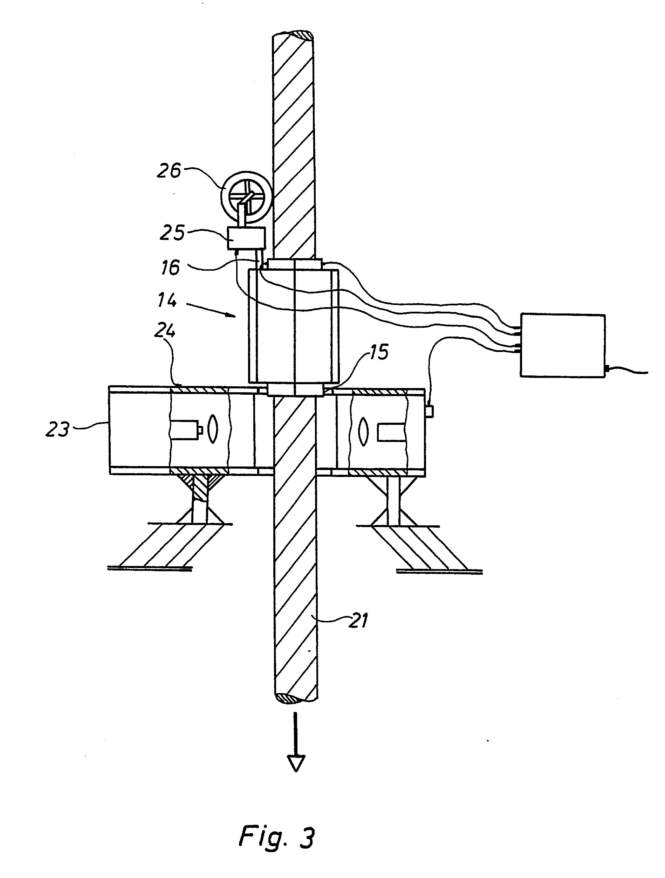

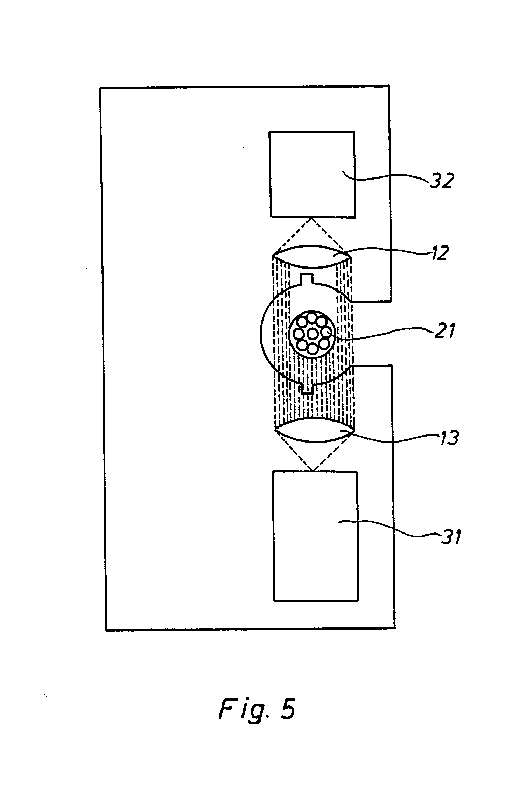

Wie sich aus der Gerätedarstellung der Fig. 3 ergibt, ist die opto-elektrische Durchmessereinrichtung in dem Gehäuse (23) untergebracht. Gemäß der Darstellung der Fig. 5 folgt auf den Laseremitter (31) ein Linsensystem aus beiderseits konvexen Linsen (12, 13), welche diametral einander gegenüberliegend angeordnet sind. Der in einer Ebene senkrecht zur Seilachse verlaufende Laserstrahl erfaßt die Breite des Förderseiles, weil er in der dargestellten Ebene hin-und herwandert. Das bewirkt ein nicht dargestellter rotierender Mehrflächenspiegel.

Auf der Oberseite des Gerätegehäuse (23) sitzt der allgemein mit (14) bezeichnete Magneterreger in einer Aussparung (15) des Gehäuses (23) formschlüssig, so daß sie sich während der Messung nicht verschieben kann. Auf dem Magneterreger (14) ist an einer Seite mit einer Stütze (16) der Rollenträger (25) befestigt. Mit Kabelverbindungen sind die notwendigen elektrischen oder elektronischen Anschlüsse für die Auswerteelektronik ausgeführt.

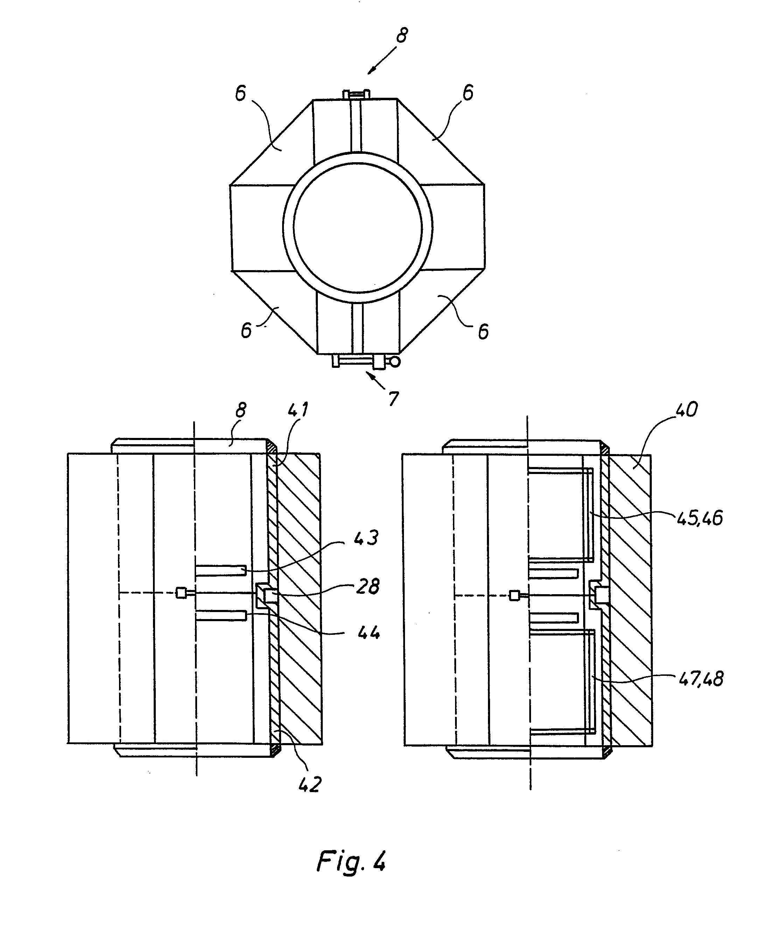

Der Magneterreger ist gemäß der Darstellung der Fig. 4 hälftig geteilt, wobei die Hälften mit einem Scharnier (8) verbunden und einem diesen diametral gegenüberliegend angeordneten Verschluß (7) zusammengehalten werden. Jede Hälfte weist vorzugsweise aus Aluminium bestehende Füllstücke (6) mit dreieckförmigem Querschnitt auf, wodurch sich mit den Permanentmagneten die Achteckform ergibt. Verwendet wird als magnetischer Rückschluß eine jeweils außen in Fig. 4 - schraffiert wiedergegebene Eisenplatte (40). Den Eisenplatten liegen zwei jeweils aus Halbrohren zusammengesetzten Büchsen (41, 42) an, welche das aus mehreren, nicht dargestellten Permanentmagneten bestehende Magnetsystem vor dem Seil schützen. Die Stege (43, 44) tragen die nicht dargestellten Wicklungen der Streufeldspulen (1 bis 4), welche ober-und unterhalb der Wicklung (28) der Querschnittsmeßspule angeordnet sind.

In der rechten unteren Darstellung der Fig. 4 sind die Stege (45 bis 48) der Wicklungen der Querschnittsmeßspulen (36 bis 39) wiedergegeben.

## Ansprüche

1. Gerät zur Prüfung von ferromagnetischen Stahldrahtseilen, bei dem das zu prüfende Förderseil durch das Feld von Permanentmagneten bewegt wird und Streufelder erfaßt werden, wobei wenigstens eine vorzugsweise seilumfassende Induktionsspule vorgesehen ist und der Meßeinrichtung eine Auswerteelektronik nachgeschaltet ist, dadurch gekennzeichnet, daß zur Erfassung der Streufelder Differentialmeßspulen (1 bis 4) dienen und wenigstens eine weitere Induktionsspule (28) mit nachgeschaltetem Integrator (34) den Seilquerschnitt wiedergebende Signale abgibt, und daß der mit einer opto-elektronischen bzw. -elektrischen Abtastung des zu prüfenden Förderseils (21) festgestellte Seildurchmesser, der festgestellte metallische Seilquerschnitt, sowie die Summe der Streufelder zusammen mit einer Seilmarke (25, 26) und einer Zeitmarke registriert sind.

2. Gerät nach Anspruch 1, dadurch gekennzeichnet, daß als Permanentmagnete Seltenerdmagnete dienen.

3. Gerät nach einem der Ansprüche 1 oder 2, dadurch gekennzeichnet, daß die Differentialspulen (1 bis 4) paarweise das Förderseil (21) umfassen und über die zwischen den Magnetpolen (27, 29) befindliche Seillänge im Abstand voneinander angeordnet sind.

4. Gerät nach einem der Ansprüche 1 bis 3, dadurch gekennzeichnet, daß eine zur Seilquerschnittsmessung dienende Induktionsspule (28) zwischen den Differentialmeßspulen (1 bis 4) angeordnet und seilumfassend ausgebildet ist.

5. Gerät nach einem der Ansprüche 1 bis 3, dadurch gekennzeichnet, daß mehrere paarweise zusammenwirkende Seilquerschnittsmeßspulen (36 bis 39) an den Polen der Permanentmagnete (27, 29) angeordnet sind.

6. Gerät nach einem der Ansprüche 1 bis 5, dadurch gekennzeichnet, daß als opto-elektrische Seildurchmesser-Erfassungsanordnung eine Laserstrahlmeßeinrichtung dient.

0 286 712

Verstärker Streufeld —33

Integrator Flußmessung (Querschnitt) —34

Auswerteeinheit Durchmessererfassung —35

Registriergerät

- Wegmarke
- Durchmesser
- metallischer Querschnitt
- Summenspur Streufeld
- Streufeldspulen 1-4
- Zeitmarke

*Fig.1*

A 32 659

A 32 659

Verstärker Streufeld

Integrator Flußmessung (Querschnitt)

Auswerteeinheit Durchmessererfassung

Registriergerät

—Zeitmarke

Streufeldspulen 1 – 4

Streufeld

—Summenspur

metallischer Querschnitt—

—Durchmesser

—Wegmarke

22

36

37

5

38

39

1

2

3

4

Fig. 2

Fig. 3

A32659

Fig. 4

A 32659

Fig. 5